(19)

Europäisches
Patentamt
European
Patent Office
Office européen
des brevets

(11) **EP 2 703 872 A1**

(12) **EUROPEAN PATENT APPLICATION**
published in accordance with Art. 153(4) EPC

(43) Date of publication:
**05.03.2014 Bulletin 2014/10**

(51) Int Cl.:
***G02B 26/10*** *(2006.01)*

(21) Application number: **11864515.9**

(22) Date of filing: **26.04.2011**

(86) International application number:
**PCT/JP2011/060189**

(87) International publication number:
**WO 2012/147167 (01.11.2012 Gazette 2012/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **TOYOTA JIDOSHA KABUSHIKI
KAISHA**
**Toyota-shi, Aichi-ken, 471-8571 (JP)**

(72) Inventor: **TANIDA, Atsushi**
**Toyota-shi, Aichi-ken, 471-8571 (JP)**

(74) Representative: **TBK**
**Bavariaring 4-6**
**80336 München (DE)**

(54) **MIRROR DEVICE**

(57)     A mirror apparatus includes beams that support a mirror portion therebetween, the mirror portion having a mirror on a surface thereof, and drives the beams in a torsional direction to cause the mirror portion to oscillate at a predetermined resonance frequency, wherein thermally deformable materials that deform due to heating are provided on surfaces of the beams, and a spring constant of the beams is adjusted such that thermal deformations of the thermally deformable materials cause the mirror portion to oscillate at the predetermined resonance frequency.

FIG.1A

# FIG.1B

**Description**

Technical Field

The present invention is related to a mirror apparatus and, in particular, a mirror apparatus that includes beams that support a mirror portion therebetween, the mirror portion having a mirror on a surface thereof, and drives the beams in a torsional direction to cause the mirror portion to oscillate at a predetermined resonance frequency.

Background Art

According to a prior art, a micro oscillating body that includes a movable part supported by a torsional spring such that the movable part can oscillate around a torsional axis is known. The micro oscillating body oscillates around the torsional axis at at least one resonance frequency. Such a way of adjusting the resonance frequency of the micro oscillating body is known in which a cantilever beam construction as an adjusting part is formed at the farthest from the torsional axis of the movable part such that the adjusting part extends in parallel to the torsional axis, and the adjusting part is removed by laser processing, etc., to adjust a mass and thus the resonance frequency (see Patent Document 1, for example).

[Patent Document 1] Japanese Laid-open Patent Publication No. 2009-128463

Disclosure of Invention

Problem to be Solved by Invention

However, according to a configuration disclosed in Patent Document 1, the laser processing is required, and thus an expensive laser apparatus is required, which increase a cost. Further, there is a problem that the process is complicated, because it is necessary to process the oscillating body with a complex construction.

Therefore, it is an object in one aspect of the invention to provide a mirror apparatus that can adjust a resonance frequency at relatively low cost and with high accuracy.

Means to Solve the Problem

A mirror apparatus according to an embodiment of the invention includes beams that support a mirror portion therebetween, the mirror portion having a mirror on a surface thereof, and drives the beams in a torsional direction to cause the mirror portion to oscillate at a predetermined resonance frequency, wherein
thermally deformable materials that deform due to heating are provided on surfaces of the beams, and
a spring constant of the beams is adjusted such that thermal deformations of the thermally deformable materials cause the mirror portion to oscillate at a predetermined resonance frequency.

Advantage of the Invention

According to one aspect of the invention, it is possible to provide a mirror apparatus whose resonance frequency is adjusted at relatively low cost and with high accuracy.

Brief Description of Drawings

Fig. 1A is a plane view of an example of a mirror apparatus according to a first embodiment of the present invention.
Fig. 1B is a cross-sectional view along a line A-A in Fig. 1A.
Fig. 2A is a plane view of an example of a mirror apparatus according to a second embodiment of the present invention.
Fig. 2B is an enlarged plane view of a B region in Fig. 2A.
Fig. 3A is a plane view of an example of a mirror apparatus according to a third embodiment of the present invention.
Fig. 3B is an enlarged plane view of a region C in Fig. 3A.
Fig. 4A is a plane view of an example of a mirror apparatus according to a fourth embodiment of the present invention.
Fig. 4B is a cross-sectional view along a line D-D in Fig. 4A.
Fig. 5 is a diagram for illustrating an example of a mirror apparatus according to a fifth embodiment of the present invention.
Fig. 6 is a diagram for illustrating an example of a mirror apparatus according to a sixth embodiment of the present invention.
Fig. 7 is a plane view of an example of a mirror apparatus according to a seventh embodiment of the present invention.
Fig. 8 is a plane view of an example of a mirror apparatus according to an eighth embodiment of the present invention.
Fig. 9 is a diagram for illustrating an example of a mirror apparatus according to a ninth embodiment of the present invention.
Fig. 10 is a diagram for illustrating an example of a mirror apparatus according to a tenth embodiment of the present invention.

Description of Reference Symbols

10 mirror portion
20 beam
30-49 thermally deformable material
60 frame
70-75 heater

Best Mode for Carrying Out the Invention

In the following, embodiments for carrying out the present invention will be described in detail by referring to the accompanying drawings.

[First Embodiment]

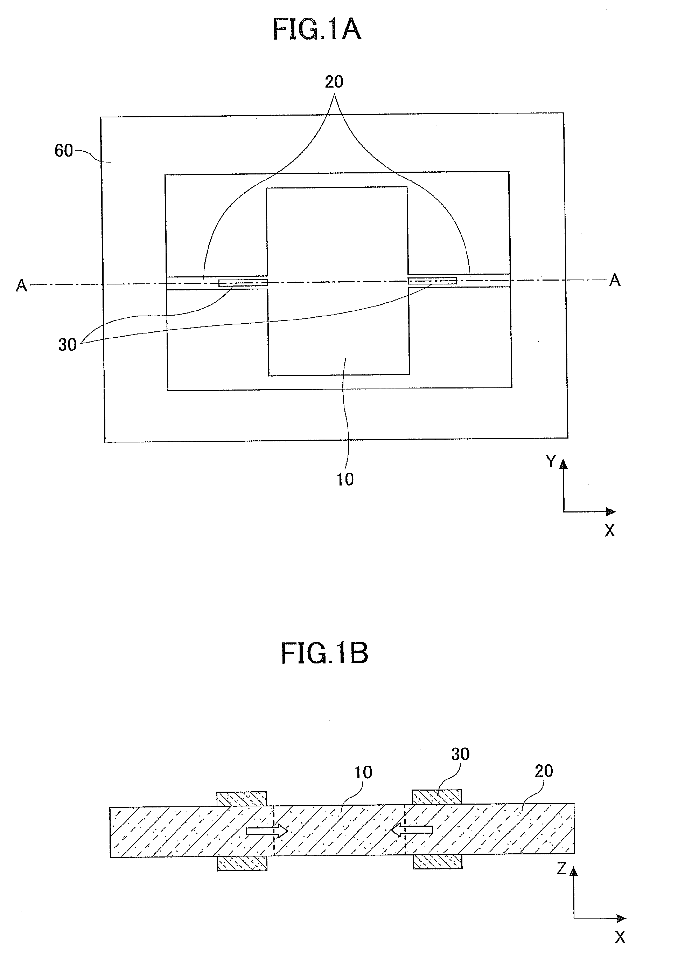

Fig. 1A is a plane view of an example of a mirror apparatus according to a first embodiment of the present invention. In Fig. 1A, the mirror apparatus according to the first embodiment includes a mirror portion 10, beams 20, thermally deformable materials 30, and a frame 60.

The mirror portion 10 is coupled to inner ends of the respective beams 20 such that the mirror portion 10 is supported between the beams 20. Outer ends of the beams are coupled to the frame 60 and thus are supported by the frame 20. The thermally deformable materials 30 are provided on surfaces of the beams.

The mirror portion 10 has a mirror on a surface thereof for reflecting light with the mirror. The mirror portion 10 is plate-shaped. The mirror portion 10 may be configured such that the mirror is provided on the surface of a plate-shaped member or the plate-shaped member itself is mirror-finished. By emitting the light to the mirror portion 10 where the light is reflected at the mirror, the reflected light can be applied to a predetermined location.

The mirror portion 10 is configured as a movable portion such that the reflection light can be moved. As illustrated in Fig. 1A, the mirror portion 10 is supported by the beams 20 at the opposite side such that the mirror portion 10 can be oscillated (vibrated, rotated, or pivoted) around an axis of the beams 20.

The beams 20 is a drive medium for supporting and oscillating the mirror portion 10. The beams 20 have elasticity to function as a spring. The beams extend along the same line to support the mirror portion 10 from the opposite sides and have an axis for the mirror portion 10. A rotation force or oscillating force is generated when the beams are twisted, which causes the mirror portion 10, which is supported by the elastic beams 20, to oscillate around the axis. It is noted that a drive source for oscillating the beams 20 may be a magnetic force or a piezoelectric element. Further, the drive source may be provided outside of the beams 20 or provided in the beams 20. By oscillating the mirror portion 10 with the beams 20, the light incident on the mirror portion 10 can be caused to scan, which provides a function as a scanner. In this way, the mirror apparatus according to the embodiment can be used as an optical device such as a scanner, etc., for example.

The frame 60 is an outer frame for supporting the beams 20 and the mirror portion 10. The mirror portion 10 and the beams 20 are movable elements, while the frame 60 is a fixed element and supports the beams 20 and the mirror portion 10 that oscillate.

The mirror portion 10, the beams 20 and the frame 30 may be formed by various materials, as long as they can serve their functions. The mirror portion 10, the beams 20 and the frame 30 may be formed by a semiconductor substrate, for example. For example, a SOI (Silicon On Insulator) substrate in which an insulation film is sandwiched by silicon substrates. In this case, when the mirror portion 10 and the beams 20 are formed by only a thin silicon substrate on the upper side and the frame 60 is formed by the SOI substrate as a whole, the beams 20 can function as a spring and the frame 60 can function as a fixed support element which has no elasticity.

The thermally deformable material 30 is formed by a material that is deformed by heating, and functions as means for changing a spring constant of the beams 20 by the thermal deformation. As illustrated in Fig. 1A, the thermally deformable material 30 is provided on surfaces of the respective beams 20.

Fig. 1B is a cross-sectional view along a line A-A in Fig. 1A. In Fig. 1B, the thermally deformable materials 30 are formed at four locations in total, including two locations on upper surfaces of the beams 20 and two locations on lower surfaces of the beams 20. It is noted that a center portion forms the mirror portion 10; however, in the section view along the line A-A, the mirror portion 10 and the beams 20 are formed seamlessly. The thermally deformable materials 30 are provided on the top and lower surfaces of the beams 20 on the opposite sides of the mirror portion 10 such that the mirror portion 10 is between the left and right thermally deformable materials 30. The thermally deformable materials 30, when they are thermally shrunk, for example, apply stress such that the beams 20 shrink in a longitudinal direction of the beams 20. With this arrangement, because the beams 20 become shrunk, the spring constant increases. In this way, the thermally deformable materials 30 can increase the spring constant of the beams when the thermally deformable materials 30 are shrunk.

The thermally deformable materials 30 may be formed by various materials as long as they are deformed by heating. The thermally deformable materials 30 may be formed by an amorphous material, for example. The amorphous material in an amorphous status does not have a regular atomic construction in contrast to a crystal, and it has short range order but does not have long range order. The amorphous material has characteristics such that a phase changes due the heating to be a polycrystalline material. The amorphous material thermally deforms to shrink when it becomes a polycrystalline material due to the phase change by the heating. Thus, the amorphous material may be used as the thermally deformable materials 30.

The thermally deformable materials 30 need to be attached to the beams 20 such that the stress generated at the time of heating is transmitted to the beams 20. The thermally deformable materials 30 may be in any form as long as the thermally deformable materials 30 are attached to the beams 20 in a solid status. The thermally deformable materials 30 may be attached to the beams 20 in a form of a thin film, for example. For example, the amorphous material can be attached on the surfaces of the beams 20 in a form of a thin film using CVD (Chemical Vapor Deposition), a vapor deposition, etc. For example, at first, a thin film of the amorphous material is formed on the overall surface including the surfaces of the beams, and then etching is performed to remove unnecessary film portions so that the amorphous materials can be formed on predetermined regions of the beams 20. With this arrangement, the thermally deformable materials 30 can be provided on the surfaces of the beams 20 such that the thermally deformable materials 30 adhere to the surfaces of the beams 20, and the deformation of the thermally deformable materials 30 can be transmitted to the beams 20 as a deformation stress.

Various amorphous materials including an amorphous semiconductor material and an amorphous metal material, for example, may be used. An amorphous silicon can be used as an amorphous semiconductor material, for example. Cobalt can be used as an amorphous semiconductor material, for example.

If the mirror apparatus according to the embodiment is formed by the semiconductor substrate, it is preferable to use the amorphous material that is used for the semiconductor process. For example, if the mirror apparatus according to the embodiment is formed by the semiconductor substrate such as the SOI substrate, etc., using the amorphous silicon as the amorphous material enables forming the thermally deformable materials 30 with the same process as used in an ordinary semiconductor process. Because there is no need to introduce a specific process for providing the thermally deformable materials 30, it is possible to easily adjust the spring constant of the beams 20 without increasing cost.

It is noted that the resonance frequency f can be derived from a formula (1) where k is the spring constant and I is a moment around the axis.

$$f = \frac{1}{2\pi} \sqrt{\frac{k}{I}} \qquad (1)$$

As indicated by the formula (1), the resonance frequency f can be changed by changing the spring constant k.

If the amorphous material is used as the thermally deformable materials 30, the spring constant can be adjusted by selecting a heating temperature. In general, if the heating is performed with a high temperature, the amount of the shrinkage of the amorphous material becomes great, and if the heating is performed with a low temperature, the amount of the shrinkage of the amorphous material becomes small. Thus, with respect to the mirror apparatus according to the embodiment, the resonance frequency may be measured after the mirror apparatus illustrated in Fig. 1A has been formed, and the spring constant suited for changing the measured resonance frequency to a predetermined resonance frequency may be calculated with the formula (1) to determine the heating temperature.

For example, if the amorphous material is used as the thermally deformable materials 30, the heating temperature may be within a range from 600 °C to 900 °C. The measurement of the resonance frequency makes it clear how much the spring constant is to be changed to implement the predetermined resonance frequency f, and thus the heating temperature can be determined correspondingly.

It is noted that a heating condition such a heating time, etc., as well as the heating temperature can be adjusted. If the amount of the deformation of the thermally deformable materials 30 can be adjusted by adjusting the heating time, the deformation amount and thus the spring constant k may be adjusted by changing the heating time such that the predetermined resonance frequency f is implemented. In this way, the heating condition can be set with various parameters related to the heating as long as the deformation amount of the thermally deformable materials 30 can be adjusted.

Further, if the amorphous material is used as the thermally deformable materials 30, the thermally deformable materials 30 shrink by the heating; however, such thermally deformable materials 30 that extend by the heating may be used. In this case, the thermally deformable materials 30 apply the stress such that the beams 20 extend, and thus the spring constant k of the beams 20 is decreased to adjust the resonance frequency f. In this way, the thermally deformable materials 30 according to the embodiment may be any material including a material that shrinks by the heating as well as a material that extends by the heating, as long as the deformation by the heating causes the spring constant k to be changed to implement the predetermined resonance frequency f. In this way, various thermally deformable materials 30 can be utilized according to the applications.

It is noted that a concrete way of adjusting the resonance frequency may be as follow. At first, a construction body of the mirror apparatus illustrated in Fig. 1A is formed. At that time, the thermally deformable materials 30 are provided in a pre-heating status in which the thermally deformable materials 30 are not deformed.

Next, the resonance frequency of the mirror apparatus illustrated in Fig. 1A is measured. Next, the heating condition is set according to the measured resonance frequency. The heating condition can be set using the parameters such as a heating temperature, etc., with which the deformation amount of the thermally deformable materials 30 can be adjusted. Next, the resonance frequency f of the mirror apparatus is measured during the heating. In this case, the heating may be implemented by placing the mirror apparatus as a whole in a furnace to heat the mirror apparatus as a whole. Alternatively, when there is means for locally heating only a part of the thermally deformable materials 30, such partial heating may be performed. When the predetermined resonance frequency f is obtained, the heating is completed. With such a way of adjusting the resonance frequency f, the resonance frequency f of the mirror apparatus can be adjusted with high accuracy.

It is noted that, according to the way of adjusting the resonance frequency f described above, because the resonance frequency f is measured during the heating, the heating time is not set; however, the heating time may be used as a parameter, for example, and the adjustment is performed such that the resonance frequency f is measured after the heating for the heating time, and then the next heating time is set based on the measurement result. In this way, if the measurement of the resonance frequency f during the heating is difficult, an adjustment way is performed such that the heating for a predetermined time may be repeated to bring the resonance frequency f close to the predetermined resonance frequency f step by step.

For example, if the amorphous material is used as the thermally deformable materials 30, the thermally deformable materials 30 have changed to the polycrystalline materials after the adjustment of the resonance frequency; however, in terms of the outward appearance, the thermally deformable materials 30 have not changed from the pre-heating status. Thus, the outward appearance of the mirror apparatus illustrated in Fig. 1A remains as it is.

According to the mirror apparatus of the first embodiment, the resonance frequency f can be adjusted with high accuracy without complex processing. Further, if the mirror apparatus is formed of the semiconductor material, it is possible to utilize a conventional process to manufacture the mirror apparatus by using the material, which is used in the conventional semiconductor process, to form the thermally deformable materials 30. With this arrangement, it becomes possible to provide the mirror apparatus that implements the mirror oscillation with an accurate resonance frequency f without substantially increasing the manufacturing cost.

It is noted that from a second embodiment components that are different from those in the first embodiment are mainly described. From the second embodiment, the components that are not described in particular include the components of the mirror apparatus according to the first embodiment, and thus explanations for the components in the first embodiment are applicable.

[Second Embodiment]

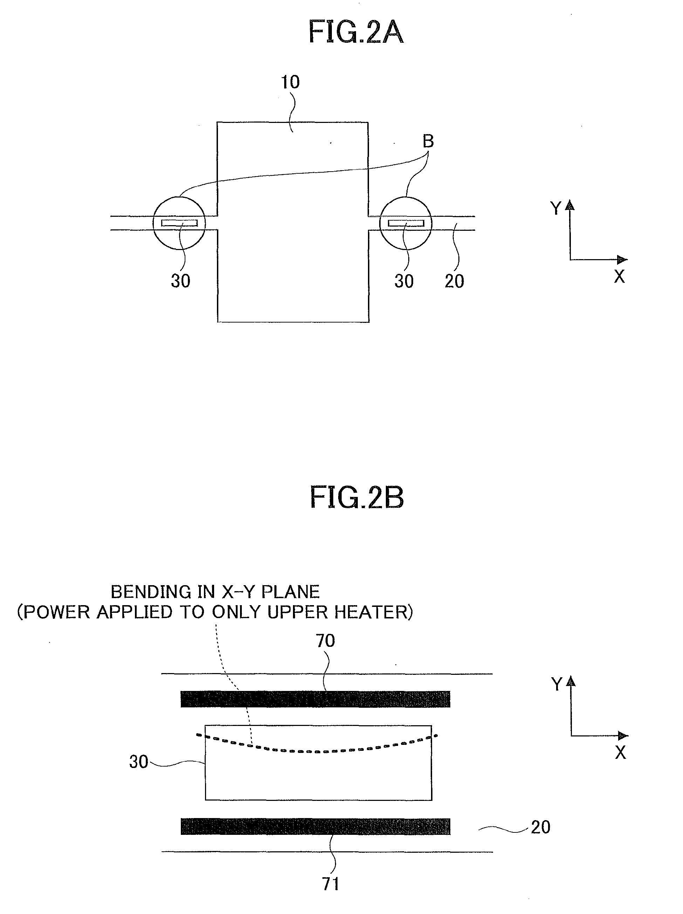

Fig. 2A is a plane view of an example of a mirror apparatus according to a second embodiment of the present invention. As illustrated in Fig. 2A, the mirror apparatus according to the second embodiment is the same as the mirror apparatus according to the first embodiment in that it includes the mirror portion 10, the beams 20 and the thermally deformable materials 30. It is noted that the mirror apparatus according to the second embodiment also includes the frame 60, though the illustration of the frame 60 is omitted in Fig. 2A. In this way, as main components, the mirror apparatus according to the second embodiment includes the same components as the mirror apparatus according to the first embodiment.

Fig. 2B is an enlarged plane view of a B region in Fig. 2A. In Fig. 2B, the mirror apparatus according to the second embodiment is the same as the mirror apparatus according to the first embodiment in that the thermally deformable materials 30 are provided on the surfaces of the beams 20; however, the mirror apparatus according to the second embodiment differs from the mirror apparatus according to the first embodiment in that heaters 70 and 71 are provided around the thermally deformable materials 30 in the longitudinal direction. In this way, the heaters 70 and 71 may be provided around the thermally deformable materials 30 in the longitudinal direction.

The heaters 70 and 71 are means for heating the thermally deformable materials 30. The heaters 70 and 71 are provided along the longitudinal direction of the beams such that the heaters 70 and 71 are opposed to the upper side (+Y side) and the lower side (-Y side) of the thermally deformable materials 30, respectively, as illustrated in Fig. 2B, for example. With this arrangement, if power is applied to only the heater 70 on the upper side (+Y side), only the upper side (+Y side) of the thermally deformable materials 30 can be thermally deformed. In Fig. 2B, such a status is illustrated in which the amorphous material is used as the thermally deformable materials 30 and only the upper side (+Y side) of the thermally deformable material 30 is to be shrunk. With this arrangement, because a force for bending in Y direction in an X-Y plane can be generated, the spring constant k of the beams 20 can be adjusted with the deformation in the direction perpendicular to the axis. In this way, by using the heaters 70 and 71, which are provided near only the local portions of the thermally deformable materials 30, to perform the heating, only the local portions of the thermally deformable materials 30 can be heated to be thermally deformed. With this arrangement, it becomes possible to locally deform the beams to adjust the spring constant k, which enables adjusting the spring constant with increased accuracy and the oscillation drive with the predetermined resonance frequency f.

The heaters 70 and 71 may be of any type as long as the heaters 70 and 71 can generate heat independently. The heaters 70 and 71 may be formed by thin films of a high resistance material, for example. For example, a tantalum silicon nitride (TaSiN) is a high resistance material, and the thin films of TaSiN may be provided as the heaters 70 and 71. In this case, by applying the power to the thin films of TaSiN, the heat can be generated from the heaters 70 and 71. TaSiN is also one of the materials that are used in the conventional semiconductor process, and thus the heaters 70 and 71 can be formed without adding a complex process.

Further, in Fig. 2B, the example is described in which the power is applied to only the heater 70 on the upper side (+Y side); however, it is needless to say that the power can be applied to only the heater 71 on the lower side (-Y side) to cause only the lower side (-Y side) of the thermally deformable materials 30 to shrink by the heating.

Further, the power may applied to the heater 70 on the upper side (+Y side) and the heater 71 on the lower side (-Y side) while a magnitude of current passing through the heater 70 may be made different from that of the heater 71 or a duration time for which the current passes through the heater 70 may be made different from that of the heater 71. If it is desirable that imbalance in the direction perpendicular to the oscillation axis is modified, such an adjustment may be performed; however, it is necessary to make the spring constant k of the beams as a whole greater.

Further, if a local thermal deformation is not necessary, in particular, and it is desirable that the thermally deformable materials 30 are thermally deformed in the longitudinal direction of the beams, the current may be applied uniformly to the heaters 70 and 71.

It is noted that the thermally deformable materials 30 and the heaters 70 and 71 may be at the top and lower surfaces of the beams 20, the thermally deformable materials 30 may be a heat shrinkable material such as an amorphous silicon as well as a heat extendable material, and other various detailed contents of the first embodiment can be applicable as they are, and thus the explanation thereof is omitted.

Further, with respect to the way of adjusting the resonance frequency f, different points in setting the heating condition with respect to the mirror apparatus according to the first embodiment are that a condition of applying the power to the heaters 70 and 71 may be set instead of the heating temperature and the heating condition can be set separately for the respective heaters 70 and 71. Other adjustment contents are the same as those of the mirror apparatus according to the first embodiment, and thus the explanation thereof is omitted.

According to the mirror apparatus according to the second embodiment, the thermally deformable materials 30 can be locally deformed to adjust the spring constant k of the beams 20, which enables adjusting the resonance frequency f with increased accuracy.

[Third Embodiment]

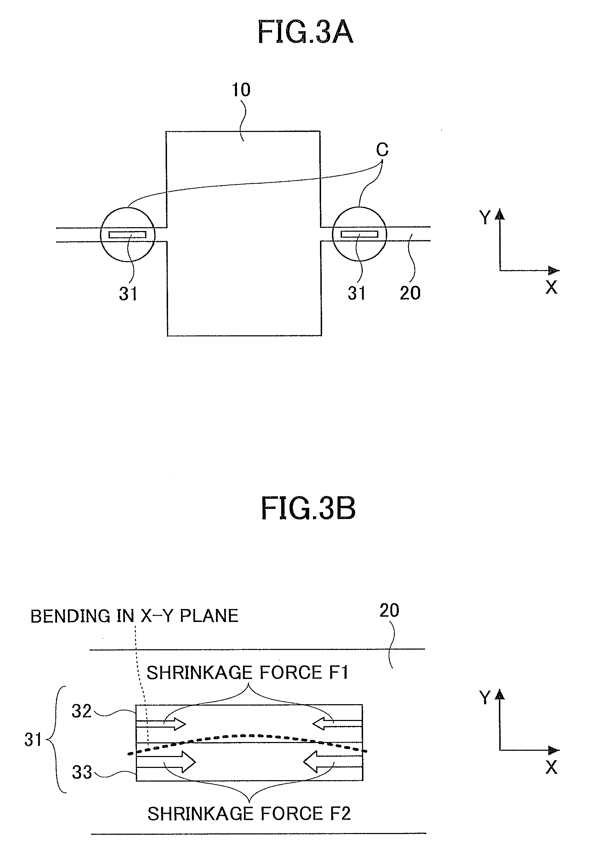

Fig. 3A is a plane view of an example of a mirror apparatus according to a third embodiment of the present invention. In Fig. 3A, the mirror apparatus according to the third embodiment is the same as the mirror apparatus according to the first embodiment in that it includes the mirror portion 10, the beams 20 and the thermally deformable materials 31. Further, the mirror apparatus according to the third embodiment may include the frame 60 as is the case with the first embodiment, though the illustration of the frame 60 is omitted in Fig. 3A. In this way, as main components, the mirror apparatus according to the third embodiment includes components similar to those of the mirror apparatus according to the first embodiment.

Fig. 3B is an enlarged plane view of a region C in Fig. 3A. In Fig. 3B, the thermally deformable materials 31 are formed on the surfaces of the beams 20. The different point with respect to the mirror apparatus according to the first embodiment is that the thermally deformable materials 31 include two different types of thermally deformable materials 32 and 33.

The thermally deformable materials 31 each are comprised of two types of the thermally deformable materials 32 and 33 which have different thermal deformation factors. In Fig. 3B, the thermally deformable materials 31 each are divided into two section in the direction perpendicular to the axis direction to form the thermally deformable materials 32 and 33 that extend in parallel in a direction parallel to the axis direction. In other words, a region comprised of the thermally deformable material 32 and a region comprised of the thermally deformable material 33 are provided in parallel in the longitudinal direction of the beams such that these regions are adjacent to each other. With this arrangement, when the thermally deformable materials 31 are heated, the force for bending is generated in the direction perpendicular to the axis direction because of the difference in the thermal deformation factors between the thermally deformable materials 32 and 33, which enables adjusting the beams 20 in the Y direction.

In Fig. 3B, for example, the thermally deformable material 32 may be formed by an amorphous silicon alone, and the thermally deformable material 33 may be formed by an amorphous silicon including an impurity. When impurity such as arsenic (As), phosphorus (P), etc., is added to the amorphous silicon, the heat shrinkage percentage is changed such that it becomes greater than that of the amorphous silicon. Thus, when the thermally deformable materials 32 and 33 are heated with the same temperature, a shrinkage force F2, which is greater than a shrinkage force F1 of the thermally deformable material 32, is generated in the thermally deformable material 33, which enables the adjustment for bending in the Y direction in the X-Y plane. In this way, by providing the thermally deformable materials 31 that are composed of two types of the thermally deformable materials 32 and 33 with different heat shrinkage percentages, the adjustment can be possible in the axis direction of the beams 20 as well as in the direction perpendicular to the axis.

This thermal deformation is similar to that in the mirror apparatus according to the second embodiment.

In other words, according to the mirror apparatus according to the third embodiment, it is possible to generate the stress in the direction perpendicular to the oscillation axis with a simple configuration without the heater 70. With this arrangement, even with a simple configuration, it becomes possible to adjust the spring constant k of the beams 20 in the directions including the direction perpendicular to the oscillation axis with high accuracy, and thus the oscillation with the predetermined resonance frequency f can be implemented with high accuracy.

It is noted that, in order to form the thermally deformable materials 31 illustrated in Fig. 3B, at first, the thermally deformable materials 32 comprised of only the amorphous material are formed as a whole, and then the impurity such as As, P, etc., may be added with ion implantation to the regions of the thermally deformable materials 33 using masks or the like. Because the thermally deformable materials 31 themselves can be formed by the same process as the ordinary semiconductor process, the thermally deformable materials 31 can be provided with an inexpensive process.

Further, in Fig. 3B, the example in which the thermally deformable materials 31 are formed by two types of the thermally deformable materials 32 and 33; however, the number of the types of the thermally deformable materials may be further increased and thus the thermally deformable materials 31 may be formed by three or more types of the thermally deformable materials.

In this way, according to the mirror apparatus of the third embodiment, even with a simple configuration without the heater 70, the adjustment can be performed not only in the longitudinal direction of the beams 20 but also in the direction perpendicular to the longitudinal direction, which enables adjusting the spring constant k of the beams 20 with high accuracy. Accordingly, it is possible to adjust the resonance frequency f of the oscillation of the mirror portion 10 with high accuracy.

[Fourth Embodiment]

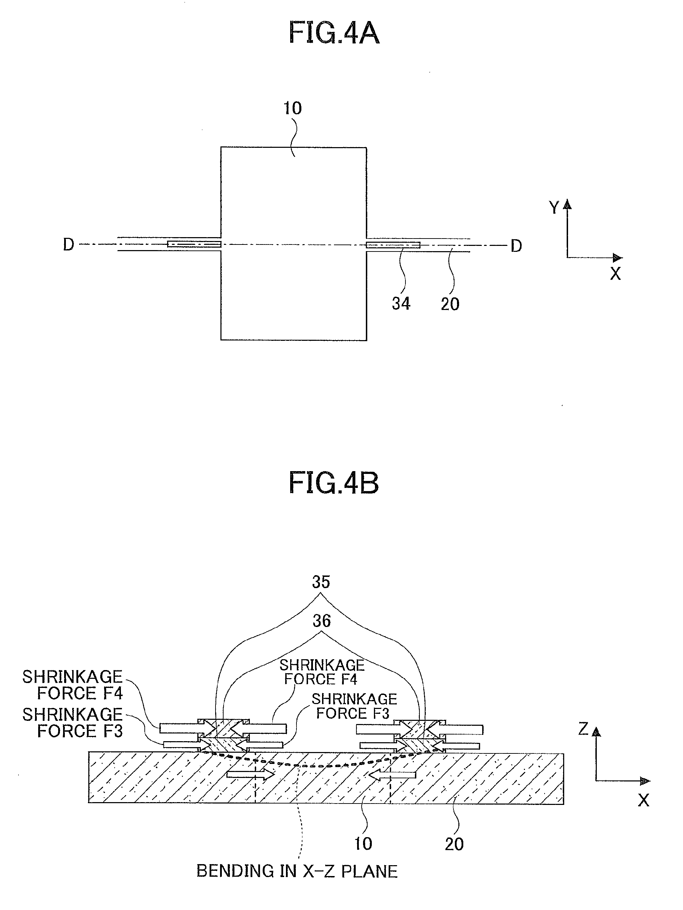

Fig. 4A is a plane view of an example of a mirror apparatus according to a fourth embodiment of the present invention. The mirror apparatus according to the fourth embodiment is the same as the mirror apparatus according to the first through third embodiments in that it includes, as main components, the mirror portion 10, the beams 20 and the thermally deformable materials 31. It is noted that in Fig. 4A the frame 60 is omitted; however, the mirror apparatus according to the fourth embodiment may include the frame 60 as is the case with the first embodiment.

Fig. 4B is a side cross-sectional view along a line D-D in Fig. 4A. In Fig. 4B, thermally deformable materials 34 are provided on the surfaces of the beams 20. The thermally deformable materials 34 each have two types of thermally deformable materials 35 and 36 with different thermal deformation factors. The thermally deformable materials 34 each are divided into two sections in the thickness direction to form these two types of thermally deformable materials 35 and 36. In other words, thermally deformable materials 34 each are configured such that the thermally deformable materials 36 are stacked on the respective thermally deformable materials 35. In this way, the thermally deformable materials 34 each may be configured such that the thermally deformable materials 34 each include in the thickness direction two or more types of the thermally deformable materials with different thermal deformation factors. With this arrangement, it becomes possible to cause the beams 20 to deform in the vertical direction, which enables adjusting the spring constant k using the deformation in the horizontal and longitudinal direction as well as the bending deformation in the vertical direction of the beams 20.

In Fig. 4B, for example, the lower side thermally deformable material 35, which is in direct contact with the surface of the beam 20, may be formed by an amorphous silicon alone, and the thermally deformable material 36, which is above the thermally deformable material 35, may be formed by an amorphous silicon including an impurity. With this arrangement, as described with reference to the third embodiment, a shrinkage force F4 of the amorphous silicon including an impurity such as As, P, etc., becomes greater than a shrinkage force F3 of the amorphous silicon not including the impurity, which induces the stress that causes the beams to bend in the -Z direction (negative direction in the vertical direction) in the X-Z plane. With this arrangement, the spring constant k of the beams 20 can be adjusted not only in the oscillation axis direction but also in the Z direction that is perpendicular to the X-Y plane including the oscillation axis, which enables the adjustment with high accuracy.

According to the embodiment, as is the case with the third embodiment, even with a simple configuration without the heater 70, the spring constant k of the beams 20 can be adjusted in a plurality of directions.

It is noted that the formation of the thermally deformable materials 34 may be implemented by forming the whole with the amorphous silicon at first and then implanting the impurity in only the region of the thermally deformable materials 36 while adjusting the depth of the ion implantation. In this way, the thermally deformable materials 34 can be formed using the ordinary semiconductor process.

Further, in Fig. 4B, the example is described in which the thermally deformable materials 34 are formed by two types of the thermally deformable materials 35 and 36; however, the thermally deformable materials 34 may be formed by three or more types of the thermally deformable materials, as is the case with the third embodiment.

According to the mirror apparatus of the fourth embodiment, even with a simple configuration without the heater 70, it becomes possible to perform the deformation adjustment in two directions, that is to say, in the oscillation axis direction and the vertical direction of the beams 20, which enables adjusting the spring constant k of the beams 20 with high accuracy. Accordingly, it is possible to adjust the resonance frequency f of the oscillation of the mirror portion 10 with high accuracy.

[Fifth Embodiment]

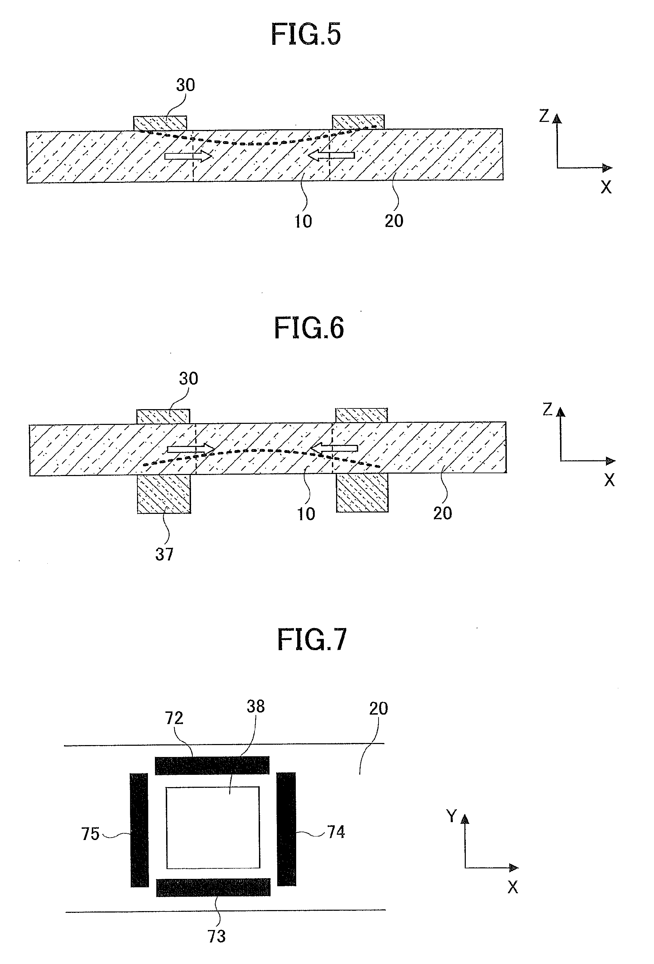

Fig. 5 is a diagram for illustrating an example of a mirror apparatus according to a fifth embodiment of the present invention. In Fig. 5, a cross section configuration including the beam 20 is illustrated. In Fig. 5, the mirror apparatus according to the fifth embodiment is the same as the mirror apparatus according to the first embodiment in that it includes the mirror portion 10, the beams 20, and the thermally deformable materials 30. It is noted that the mirror apparatus according to the fifth embodiment may include the frame 60, as is the case with the first embodiment.

On the other hand, in Fig. 5, the mirror apparatus according to the fifth embodiment differs from the mirror apparatus according to the first embodiment in that the thermally deformable materials 30 are provided on only the upper surfaces of the beams 20 and thus are not provided on the lower surfaces of the beams 20. In this way, the thermally deformable materials 30 may be provided on only the upper surfaces or lower surfaces of the beams 20. With this arrangement, for example, if the thermally deformable materials 30 are formed by a heat shrinkable material such as an amorphous material, the shrinkage force is directly applied to only the upper sides of the beams 20 and thus only internal forces act on the lower sides of the beams 20, which enables generating, in addition to the force that causes the beams 20 to shrink in the oscillation axis direction, the force that causes the beams to bend such that the beams warp in the -Z direction (negative direction in the vertical direction) in the X-Z plane.

In this way, according to the mirror apparatus of the fifth embodiment, even with a simple configuration in which the thermally deformable materials 30 are provided on only upper or lower surfaces of the beams 20, the forces can be generated in the axis direction and the vertical direction of the beams 20 to adjust the spring constant k of the beams 20. Accordingly, it is possible to adjust the resonance frequency f of the oscillation of the mirror portion 10 with high accuracy.

[Sixth Embodiment]

Fig. 6 is a diagram for illustrating an example of a mirror apparatus according to a sixth embodiment of the present invention. In Fig. 6, a side cross section configuration of the mirror apparatus including the beam 20 is illustrated. The mirror apparatus according to the sixth embodiment is the same as the mirror apparatus according to the first embodiment in that it includes the mirror portion 10, the beams 20, and the thermally deformable materials 30 and 37 on the upper and lower surfaces of the beams 20. However, the mirror apparatus according to the sixth embodiment differs from the mirror apparatus according to the first embodiment in that the thermally deformable materials 37 on the lower surfaces of the beams 20 are thicker than the thermally deformable materials 30 on the upper surfaces of the beams 20.

In this way, the mirror apparatus according to the present invention may be configured such that thermally deformable materials 30 or 37 on the upper or lower surfaces of the beams 20 are thicker. When the same thermally deformable material is used for the thermally deformable materials 30 and 37, the thermal deformation amount of the thicker thermally deformable materials 37 can be made greater. For example, in Fig. 6, when the thermally deformable materials 30 and 37 are formed by amorphous silicon films, the shrinkage force of the thermally deformable material 37 with a greater film thickness on the lower surface of the beam 20 becomes greater than that of the thermally deformable material 30 on the upper surface of the beam 20. With this arrangement, the force that causes the beams to bend such that the beams warp in the +Z direction (positive direction in the vertical direction), in addition to the force that causes the beams 20 to shrink in the oscillation axis direction, can be generated due to the thermal deformation of the thermally deformable materials 30, which enables adjusting the spring constant k using the deformation stress in two directions. Further, because the thermally deformable materials 30 and 37 are provided on the upper and lower surfaces of the beams 20, the bending force in the vertical direction can be generated without reducing the shrinkage force in the axis direction.

In this way, according to the mirror apparatus of the sixth embodiment, it becomes possible to use the deformation in two directions to adjust the spring constant k of the beams with high accuracy while reserving sufficient deformation amounts. Accordingly, it is possible to adjust the resonance frequency f of the oscillation of the mirror portion 10 with high accuracy.

[Seventh Embodiment]

Fig. 7 is a plane view of an example of a mirror apparatus according to a seventh embodiment of the present invention. In Fig. 7, the mirror apparatus according to the seventh embodiment is the same as the mirror apparatus according to the second embodiment in that it includes thermally deformable materials 38 on the surfaces of the beams and the thermally deformable materials 38 are surrounded with heaters 72 through 75.

However, the mirror apparatus according to the seventh embodiment differs from the mirror apparatus according to the second embodiment in that the shape of the thermally deformable materials 38 approximates a square. Further, the mirror apparatus according to the seventh embodiment differs from the mirror apparatus according to the second embodiment in that the thermally deformable material2 38 are surrounded with the heaters 72 through 75 on four sides thereof including the longitudinal direction as well as a shorter side direction of the beams 20.

In this way, the mirror apparatus may be configured such that the shape of the thermally deformable materials 38 is a square and the thermally deformable materials 38 are surrounded with the heaters 72 through 75 on the four sides thereof. With this arrangement, the power can be applied to the heaters 72 through 75 independently, which enables causing the thermally deformable materials 38 to deform in any direction in the X-Y plane.

For example, if the amorphous material is used as the thermally deformable materials 38, one of the heaters 72 through 75, which corresponds to the direction in which the shrinkage force is desired to be generated, is selectively heated, which enables causing the thermally deformable materials to generate the shrinkage force in any direction to adjust the spring constant k of the beams 20.

In this way, according to the mirror apparatus of the seventh embodiment, the stress due to the thermal deformation can be generated in any direction, which enables adjusting the spring constant k of the beams 20 with high accuracy. Accordingly, it is possible to adjust the resonance frequency f of the oscillation of the mirror portion 10 with high accuracy.

[Eighth Embodiment]

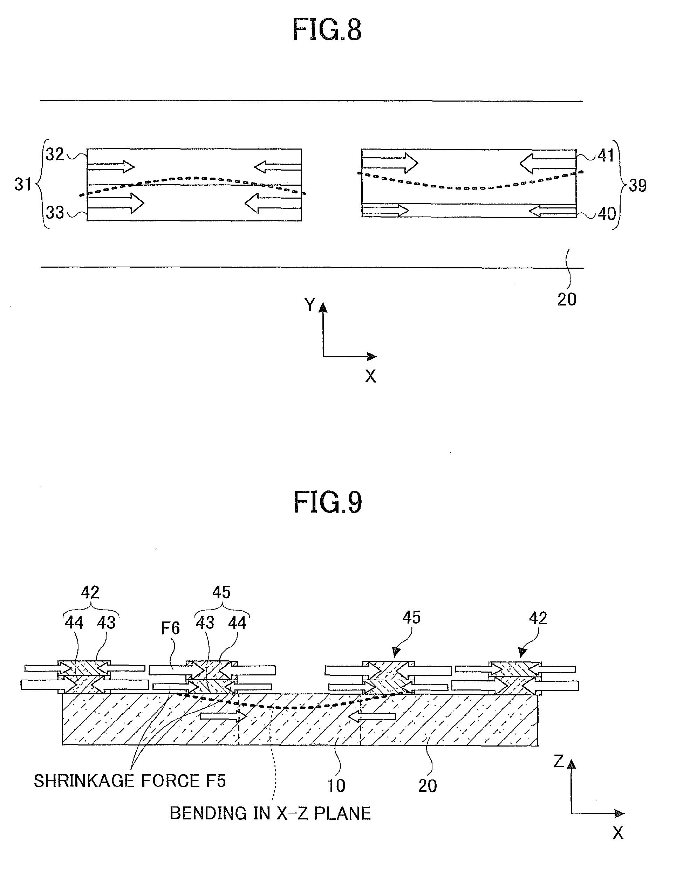

Fig. 8 is a plane view of an example of a mirror apparatus according to a eighth embodiment of the present invention. In Fig. 8, a configuration on the surface of a single beam 20 on one side is illustrated. In Fig. 8, the mirror apparatus according to the eighth embodiment differs from the first through seventh embodiments in that two thermally deformable materials 31 and 39 are provided on the surface of a single beam 20 on one side. In the first through seventh embodiments, only one thermally deformable material 30, 31, 34 or 38 is provided on one side. In this way, a plurality of thermally deformable materials 31 and 39 may be provided on the surface of a single beam 20 on one side, if necessary. With this arrangement, increased thermal deformation force can be generated.

In Fig. 8, if the thermally deformable materials 32 and 40 are formed by the amorphous silicon and the thermally deformable materials 33 and 41 are formed by an amorphous silicon including the impurity, the thermally deformable material 31 is the same as the thermally deformable material 31 illustrated in Fig. 3B according to the third embodiment. In other words, the thermally deformable material 31 is divided into two sections in a direction parallel to the axis direction to form the thermally deformable materials 32 and 33. Thus, the thermally deformable material 31 in Fig. 8 is given the same reference numeral as the thermally deformable material 31 in Fig. 3B.

On the other hand, the thermally deformable material 39 is configured such that an area of the region of the thermally deformable material 41 comprised of the amorphous silicon including the impurity is greater than that of the region of the thermally deformable material 40 comprised of the amorphous silicon alone. With this arrangement, such a configuration can be implemented that the shrinkage force in the axis direction as well as the bending force in the direction perpendicular to the axis that are generated by the thermally deformable material 39 are greater than those generated by the thermally deformable material 31.

Further, when comparing the thermally deformable material 31 with the thermally deformable material 39, the thermally deformable material 31 is configured such that the thermally deformable material 32 comprised of the amorphous silicon alone is disposed on the +Y side and the thermally deformable material 33 comprised of the impurity-containing amorphous silicon is disposed on the -Y side, while the thermally deformable material 39 is configured such that the thermally deformable material 41 comprised of the impurity-containing amorphous silicon is disposed on the +Y side and the thermally deformable material 40 comprised of the amorphous silicon alone is disposed on the -Y side. In other words, the thermally deformable material 31 and the thermally deformable material 39 have reversed arrangement with respect to the thermally deformable materials 32 and 33 and the thermally deformable materials 40 and 41 in terms of a type of the material. With this arrangement, the thermally deformable material 31 generates the force that causes the warpage in the +Y direction when it shrinks due to the heating while the thermally deformable material 39 generates the force that causes the warpage in the -Y direction when it shrinks due to the heating.

In this way, by providing a plurality of the thermally deformable materials 31 and 39 and setting, in an arbitrary manner, the arrangement order and the areas of a plurality of types of the thermally deformable materials 32, 33, 40 and 41 which form the thermally deformable materials 31 and 39, it becomes possible to cause the beams 20 to bend in an arbitrary direction in the X-Y plane. In other words, it is possible to provide the thermally deformable materials 31 and 39 with a configuration that is easily adjusted, considering a tendency of the characteristics of the mirror apparatus to be manufactured.

In this way, according to the mirror apparatus of the eighth embodiment, it becomes possible to cause the beams 20 to bend in an arbitrary direction in the X-Y plane, which enables adjusting the spring constant k flexibly. Accordingly, it is possible to adjust the resonance frequency f of the oscillation of the mirror portion 10 with high accuracy.

[Ninth Embodiment]

Fig. 9 is a side section view of an example of a mirror apparatus according to a ninth embodiment of the present invention. In Fig. 9, the upper surfaces of the beams 20 each have two thermally deformable materials 42 and 45 provided thereon on one side such that the mirror portion 10 is between the thermally deformable materials 45. Further, the thermally deformable materials 42 have the thermally deformable material 44 on the lower side and the thermally deformable material 43 on the upper side, while the thermally deformable materials 45 have a reversed configuration such that the thermally deformable material 43 is provided on the lower side and the thermally deformable material 44 is provided on the upper side. In other words, the thermally deformable materials 42 and 45 have reversed arrangement in the up-and-down direction with respect to two types of the thermally deformable materials 43 and 44.

In Fig. 9, if the thermally deformable materials 43 are formed by the amorphous silicon alone and the thermally deformable materials 44 are formed by the impurity-containing amorphous silicon, the shrinkage force F6 of the thermally deformable materials 44 becomes greater than the shrinkage force F5 of the thermally deformable materials 43. In this case, it is possible to increase the shrinkage force in the axis direction of the beams 20 at the opposite ends of thereof, and increase the bending force of the beams 20 near the mirror portion 10 such that the beams warp in the -Z direction (negative direction in the vertical direction). Further, because the thermally deformable materials 42 and 45 are provided on only the upper surfaces of the beams 20, such a bending force as a whole is generated that the beams warp in the -Z direction (negative direction in the vertical direction).

In this way, by providing the thermally deformable materials 42 and 45, each of which is comprised of a plurality of types of the thermally deformable materials 43 and 44, on the surface of the beams 20, or changing the arrangement of the thermally deformable materials 43 and 44 in the up-and-down direction, it becomes possible to cause the beams 20 to bend in an arbitrary direction in the X-Z plane, which enables adjusting the spring constant k. Accordingly, it is possible to adjust the resonance frequency f of the oscillation of the mirror portion 10 with high accuracy.

[Tenth Embodiment]

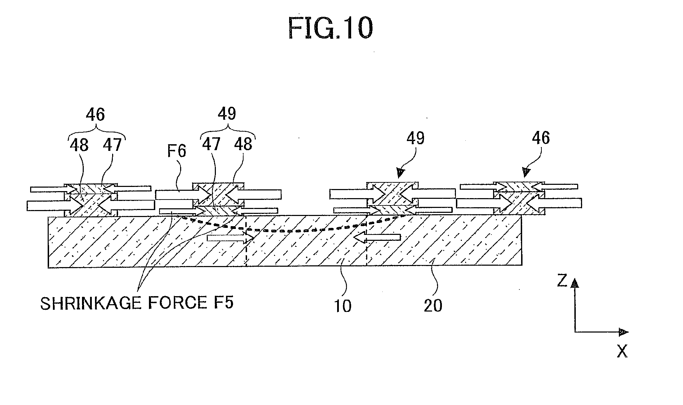

Fig. 10 is a side section view of an example of a mirror apparatus according to a tenth embodiment of the present invention. The configuration in Fig. 10 is the same as the mirror apparatus according to the ninth embodiment in that the upper surfaces of the beams 20 each have a plurality of thermally deformable materials 46 and 49 provided thereon on one side such that the thermally deformable materials 46 and 49 each have a multilayered construction of two types of the thermally deformable materials 47 and 48.

The mirror apparatus according to the tenth embodiment differs from the mirror apparatus according to the ninth embodiment in that the thickness of the thermally deformable materials 47 is different from that of the thermally deformable materials 48. In the ninth embodiment, the thickness of the thermally deformable materials 43 is substantially the same as that of the thermally deformable materials 44.

In this way, if a plurality of types of the thermally deformable materials 47 and 48 are stacked in the up-and-down direction, the thickness of the thermally deformable materials 47 may be different from that of the thermally deformable materials 48.

In Fig. 10, when the thermally deformable materials 47 are formed by the amorphous silicon alone and the thermally deformable materials 48 are formed by the impurity-containing amorphous silicon, the shrinkage force of the thermally deformable materials 48 becomes greater than that of the thermally deformable materials 47. Further, according to the embodiment, because the film thickness of the thermally deformable materials 48, whose shrinkage force is greater than that of the thermally deformable materials 47 at the same volume, is greater than that of the thermally deformable materials 47, the shrinkage force of the thermally deformable materials 48 becomes substantially greater than that of the thermally deformable materials 47. Therefore, the tendency described in Fig. 9 can be further increased.

In this way, according to the mirror apparatus of the tenth embodiment, under a situation where the thermally deformable materials 46 and 49, each of which is formed by stacking a plurality of types of the thermally deformable materials 47 and 48 on the surface of the beams 20, by making the thicknesses of the thermally deformable materials 47 and 48 different to make the volumes of the thermally deformable materials 47 and 48 different, it becomes possible to generate the bending force with a desired magnitude and in an arbitrary direction in the X-Z plane.

The present invention is disclosed with reference to the preferred embodiments. However, it should be understood that the present invention is not limited to the above-described embodiments, and variations and modifications may be made without departing from the scope of the present invention.

**Claims**

1. A mirror apparatus that includes beams that support a mirror portion therebetween, the mirror portion having a mirror on a surface thereof, and drives the beams in a torsional direction to cause the mirror portion to oscillate at a predetermined resonance frequency, wherein
thermally deformable materials that deform due to heating are provided on surfaces of the beams, and a spring constant of the beams is adjusted such that thermal deformations of the thermally deformable materials cause the mirror portion to oscillate at the predetermined resonance frequency.

2. The mirror apparatus of claim 1, wherein the thermally deformable materials are provided on upper surfaces and lower surfaces of the beams or the upper surfaces or the lower surfaces of the beams.

3. The mirror apparatus of claim 2, wherein the thermally deformable materials are amorphous materials that become polycrystalline materials and shrink after the heating.

4. The mirror apparatus of claim 3, wherein the thermally deformable materials are provided in a status of a thin film.

5. The mirror apparatus of claim 4, wherein the spring constant is adjusted by a selection of a heating temperature.

6. The mirror apparatus of claim 1, wherein the thermally deformable materials are provided on upper surfaces and lower surfaces of the beams such that a thickness of the thermally deformable materials provided on the upper surfaces is different from that of the thermally deformable materials provided on the lower surfaces.

7. The mirror apparatus of claim 1, wherein heaters are further provided around at least two opposed sides of the thermally deformable materials, and the thermally deformable materials are deformed due to the heating by applying power to the heaters.

8. The mirror apparatus of claim 7, wherein the two opposed sides are parallel to a longitudinal direction of the beams.

9. The mirror apparatus of claim 8, wherein the heaters are thin films of a high resistance material.

10. The mirror apparatus of claim 1, wherein the thermally deformable materials include regions, each of which is comprised of a different one of two or more types of materials with different thermal deformation factors.

11. The mirror apparatus of claim 10, wherein the two or more types of materials with different thermal deformation factors include an amorphous material and an impurity-containing amorphous material that is said amorphous material including an impurity.

12. The mirror apparatus of claim 10, wherein the regions are arranged in a direction that is parallel to a longitudinal direction of the beams.

13. The mirror apparatus of claim 12, wherein the regions are arranged such that the regions extend side by side in a horizontal direction.

14. The mirror apparatus of claim 12, wherein the regions are arranged such that the regions are multilayered in a vertical direction.

15. The mirror apparatus of claim 11, wherein the amorphous material is a amorphous silicon, and the impurity is an impurity that is used in a semiconductor process.

16. The mirror apparatus of claim 12, wherein the regions include regions that have different volumes.

# FIG.1A

# FIG.1B

# FIG.2A

# FIG.2B

BENDING IN X-Y PLANE
(POWER APPLIED TO ONLY UPPER HEATER)

# FIG.3A

10

C

Y

X

31          31    20

# FIG.3B

BENDING IN X-Y PLANE          20

SHRINKAGE FORCE F1

32

31

33

SHRINKAGE FORCE F2

Y

X

# FIG.4A

10

D ———————————————————— D

34    20

Y
↑
|
+———→ X

# FIG.4B

35

36

SHRINKAGE
FORCE F4

SHRINKAGE
FORCE F4
SHRINKAGE
FORCE F3

SHRINKAGE
FORCE F3

Z
↑
|
+———→ X

BENDING IN X-Z PLANE

10    20

# FIG.5

# FIG.6

# FIG.7

# FIG.8

# FIG.9

SHRINKAGE FORCE F5

BENDING IN X-Z PLANE

# FIG.10

SHRINKAGE FORCE F5

<table>
<tr><td colspan="2">**INTERNATIONAL SEARCH REPORT**</td><td>International application No.<br>PCT/JP2011/060189</td></tr>
</table>

A.  CLASSIFICATION OF SUBJECT MATTER
*G02B26/10*(2006.01)i

According to International Patent Classification (IPC) or to both national classification and IPC

B.   FIELDS SEARCHED

Minimum documentation searched (classification system followed by classification symbols)
G02B26/10, G02B26/08, B41J2/44, B81B3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>A | JP 2009-151013 A  (Canon Inc.),<br>09 July 2009 (09.07.2009),<br>claims 1, 8, 9, 12, 14; fig. 3, 4, 9<br>(Family: none) | 1,2<br>3-16 |
| Y<br><br>A | JP 2007-256862 A  (Matsushita Electric Works,<br>Ltd.),<br>04 October 2007 (04.10.2007),<br>claims 1, 3, 6; paragraphs [0013] to [0015];<br>fig. 5<br>(Family: none) | 1,2,10,12,<br>14,16<br>3-9,11,13,15 |

☒  Further documents are listed in the continuation of Box C.          ☐  See patent family annex.

| | |
|---|---|
| \*      Special categories of cited documents:<br>"A"    document defining the general state of the art which is not considered<br>       to be of particular relevance<br>"E"    earlier application or patent but published on or after the international<br>       filing date<br>"L"    document which may throw doubts on priority claim(s) or which is<br>       cited to establish the publication date of another citation or other<br>       special reason (as specified)<br>"O"    document referring to an oral disclosure, use, exhibition or other means<br>"P"    document published prior to the international filing date but later than<br>       the priority date claimed | "T"    later document published after the international filing date or priority<br>       date and not in conflict with the application but cited to understand<br>       the principle or theory underlying the invention<br>"X"    document of particular relevance; the claimed invention cannot be<br>       considered novel or cannot be considered to involve an inventive<br>       step when the document is taken alone<br>"Y"    document of particular relevance; the claimed invention cannot be<br>       considered to involve an inventive step when the document is<br>       combined with one or more other such documents, such combination<br>       being obvious to a person skilled in the art<br>"&"    document member of the same patent family |

| Date of the actual completion of the international search<br>    16 May, 2011 (16.05.11) | Date of mailing of the international search report<br>    24 May, 2011 (24.05.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/060189

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | WO 2008/041585 A1  (National Institute of Advanced Industrial Science and Technology), 10 April 2008 (10.04.2008), paragraphs [0054] to [0056]; fig. 18 & US 2010/0014142 A1 | 1,2,10,12, 14,16<br>3-9,11,13,15 |
| A | JP 2007-310274 A  (Tohoku University), 29 November 2007 (29.11.2007), claims 1, 2, 4, 5, 7; fig. 1 to 5 (Family: none) | 3-5,11,15 |
| A | JP 10-056186 A  (Toyota Central Research and Development Laboratories, Inc.), 24 February 1998 (24.02.1998), paragraphs [0067] to [0070] (Family: none) | 3-5,11,15 |
| A | JP 2007-171929 A  (Canon Inc.), 05 July 2007 (05.07.2007), paragraphs [0066] to [0072] & US 2007/0115072 A1 | 7-9 |

**EP 2 703 872 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009128463 A